# EUROPÄISCHE PATENTSCHRIFT

(11) **EP 0 683 011 B1**
(45) Veröffentlichungstag und Bekanntmachung des Hinweises auf die Patenterteilung: **01.09.1999**
(21) Anmeldenummer: 95107308.9
(22) Anmeldetag: 15.05.1995
(51) Int. Cl.: B23Q 17/22, B27C 1/12

(54) **Maschine zum Bearbeiten von Werkstücken aus Holz, Kunststoff und dergleichen**
Machine for working wooden, plastic or similar workpieces
Machine à travailler des pièces à usiner en bois, plastique ou similaires

(30) Priorität: 17.05.1994 DE 4417080
(43) Veröffentlichungstag der Anmeldung: 22.11.1995
(73) Patentinhaber: Michael Weinig Aktiengesellschaft, D-97941 Tauberbischofsheim (DE)
(72) Erfinder: Schmitt, Gerhard, 97950 Grossrinderfeld (DE)
(74) Vertreter: Jackisch-Kohl, Anna-Katharina

(56) Entgegenhaltungen:
- EP-A- 0 373 859
- DE-A- 1 453 200
- US-A- 4 457 350
- US-A- 4 724 877

## Beschreibung

Die Erfindung betrifft eine Maschine zum Bearbeiten von Werkstücken aus Holz, Kunststoff und dgl. nach dem Oberbegriff des Anspruches 1.

Es sind Maschinen bekannt, mit denen die Werkstücke so bearbeitet werden, daß ihre Ober- und Unterseiten parallel zueinander liegen. Häufig sind jedoch solche Werkstücke in ihrer Längsrichtung gebogen und/oder um ihre Längsachse verdreht. Um auch solche Werkstücke mit zumindest annähernd parallelen Ober- und Unterseiten zu versehen, werden diese Werkstücke von der Bedienungsperson von Hand in die Maschine eingegeben und zudem der Höhenabstand der die Ober- und die Unterseite des Werkstückes bearbeitenden Werkzeuge eingestellt. Eine solche Arbeitsweise ist umständlich und aufwendig. Zudem wird bei einer solchen Vorgehensweise in der Regel sehr viel Material vom Werkstück abgetragen.

Der Erfindung liegt die Aufgabe zugrunde, die gattungsgemäße Maschine so auszubilden, daß verformte Werkstücke unter geringer Spanabnahme einfach und schnell so bearbeitet werden können, daß die Werkstücke zumindest annähernd parallele Ober- und Unterseiten haben.

Diese Aufgabe wird bei der gattungsgemäßen Maschine erfindungsgemäß mit den kennzeichnenden Merkmalen des Anspruches 1 gelöst.

Mit der erfindungsgemäßen Maschine ist ein vollautomatisches Abrichten verformter Werkstücke innerhalb kürzester Zeit möglich. Mit dem Meßfühler wird die tatsächliche Dicke des zu bearbeitenden Werkstückes erfaßt und das Werkstück so ausgerichtet, daß die Auflage und die Meßfühlerfläche den geringsten Abstand voneinander haben. Dadurch ist eine optimale geringe Spanabnahme gewährleistet. Über die Schalteinrichtung wird entsprechend dem vom Meßfühler gemessenen Dickenmaß ein Schaltsignal zum Antrieb der Auflage geschickt, wodurch der Antrieb eingeschaltet und die Auflage entsprechend dem erfaßten Dickenmaß so relativ zum Meßfühler und zum Bearbeitungswerkzeug verstellt wird, daß das Werkstück unter möglichst geringer Spanabnahme so bearbeitet wird, daß seine Ober- und Unterseite nach der Bearbeitung zumindest annähernd parallel verlaufen. Mit der erfindungsgemäßen Maschine ist es möglich, auf beiden Seiten des Werkstückes gleich viel Material abzunehmen.

Ausgestaltungen der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung und in Seitenansicht eine erfindungsgemäße Abrichtmaschine,
- Fig. 2: in Draufsicht und teilweise im Schnitt die Abrichtmaschine gemäß Fig. 1,
- Fig. 3: in vergrößerter Darstellung einen Teil der Abrichtmaschine gemäß Fig. 1,
- Fig. 4: eine Schalteinrichtung der Abrichtmaschine nach Fig. 1.

Mit der Abrichtmaschine können in ihrer Längsrichtung gebogene und/oder um ihre Längsachse tordierte Holzstücke vollautomatisch so abgerichtet werden, daß diese Holzstücke nach dem Durchgang durch die Abrichtmaschine zumindest annähernd parallel zueinander liegende Ober- und Unterseiten haben. Dabei wird das Holzstück unter minimalem Holzabtrag in eine solche Form gebracht, daß die Ober- und Unterseite des Holzstückes zumindest teilweise parallel zueinander liegen.

Die Abrichtmaschine hat einen Ständer 1, auf dem ein Abrichttisch 2 höhenverstellbar gelagert ist. Auf ihm werden die Werkstücke 3 in ihrer Längsrichtung durch die Abrichtmaschine transportiert und hierbei an der Unterseite mit einem entsprechenden Werkzeug 4 bearbeitet. Das Werkzeug 4 ist ein rotierender Messerkopf mit Hobelmessern, mit denen die Unterseite des Werkstückes 3 glattgehobelt wird. Das Werkzeug 4 sitzt auf einer horizontalen Spindel 5. Im Bereich des Werkzeuges 4 ist die Auflage für das zu bearbeitende Werkstück 3 unterbrochen.

Zur Höhenverstellung des Abrichttisches 2 ist am Ständer 1 ein Antriebsmotor 6 vorgesehen, dessen Ausgangswelle über ein (nicht dargestelltes) Gelenk mit einer Gewindespindel 7 gekuppelt ist. Auf ihr sitzt eine Spindelmutter 8, die an der Unterseite des Abrichttisches 2 vorgesehen ist.

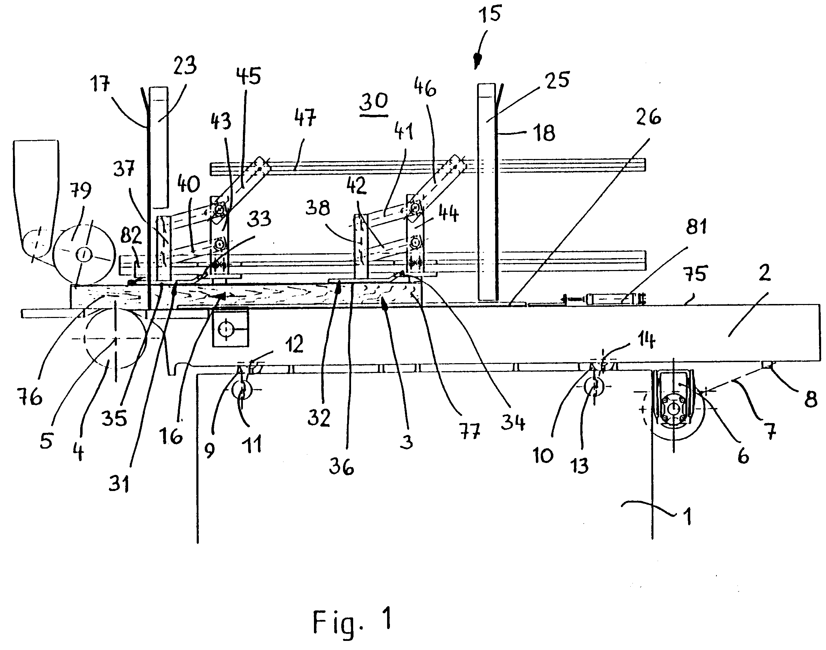

Der Abrichttisch 2 ist außerdem über Lenker 9 und 10, von denen in Fig. 1 zwei Lenker dargestellt sind, gelenkig mit dem Ständer 1 verbunden. Die Lenker 9, 10 sind um zueinander parallele horizontalen Achsen 11, 12 und 13, 14 am Ständer 1 sowie am Abrichttisch 2 angelenkt. Wird der Antriebsmotor 6 betätigt, wird die Gewindespindel 7 gedreht und dabei die Gewindemutter 8 in der entsprechenden Richtung auf der Gewindespindel 7 axial verschoben. Hierbei schwenkt der Abrichttisch 2 über die Lenker 9, 10 relativ zum Ständer 1, wodurch die Axialverschiebung der Spindelmutter 8 auf der Gewindespindel 7 ermöglicht wird. Auf diese Weise kann der Abrichttisch 2 in noch zu beschreibender Weise auf die unterschiedlichen Dicken des jeweils zu bearbeitenden Werkstückes 3 eingestellt werden.

Mit geringem Abstand oberhalb des Abrichttisches 2 befindet sich ein Magazin 15, in dem übereinander die brettartigen, in ihrer Längsrichtung gebogenen und/oder um ihre Längsachse tordierten Werkstücke 3 gelagert sind. Das jeweils unterste Werkstück 3 liegt auf dem Abrichttisch 2 auf. Die Werkstücke 3 sind so eingelegt, daß ihre Enden schräg nach oben gerichtet sind.

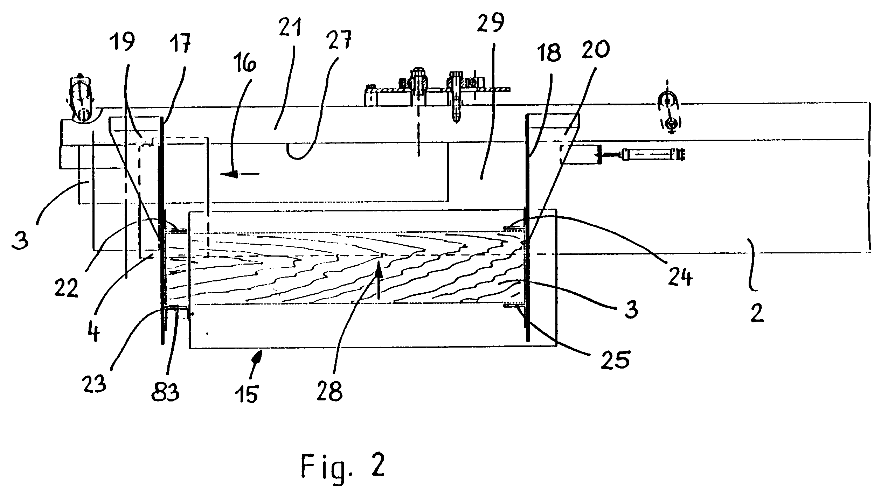

Das Magazin 15 weist zwei mit Abstand einander gegenüberliegende, vertikale und senkrecht zur Transportrichtung 16 der Werkstücke 3 sich erstreckende Seitenwände 17 und 18 auf, die jeweils über einen horizontalen Träger 19, 20 auf einem Ständerteil 21 befestigt sind. An den einander zugewandten Seiten der Seitenwände 17, 18 sind jeweils zwei mit Abstand einander gegenüberliegende L-förmige Schienen 22 bis 25 befestigt, die sich vertikal erstrecken und zwischen denen die Enden der übereinandergestapelten Werkstücke 3 liegen. Die Schienen 22, 23 und 24, 25 an den Seitenwänden 17, 18 sind jeweils so vorgesehen, daß ihre einen Schenkel parallel zueinander liegen, während die anderen Schenkel entgegengesetzt zueinander nach außen ragen. Die senkrecht von den Seitenwänden 17, 18 abstehenden Schenkel der in Transportrichtung 16 einander gegenüberliegenden Schienen 23 und 24 bzw. 23 und 25 liegen fluchtend zueinander. Die Schienen 22 bis 25 haben einen solchen Abstand vom Abrichttisch 2, daß das jeweils unterste Werkstück 3 mittels eines Schiebers 26 (Fig. 1) senkrecht zur Transportrichtung 16 bis zu einem Anschlag 27 (Fig. 2) verschoben werden kann. Er ist am Ständerteil 21 vorgesehen und erstreckt sich in Transportrichtung 16 des Werkstückes 3. In Fig. 2 ist das Werkstück 3 im Magazin 15 dargestellt, aus dem es mit dem Schieber 26 in Richtung des Pfeiles 28 bis zur Anlage am Anschlag 27 verschoben wird. In Fig. 2 ist mit gestrichelten Linien das am Anschlag 27 anliegende Werkstück 3 dargestellt, das bereits teilweise in Transportrichtung 16 verschoben worden ist.

Im Bereich oberhalb des in Transportrichtung 16 sich erstreckenden Transportweges 29 (Fig. 2) befindet sich eine Meßeinrichtung 30 (Fig. 1), mit der die Dicke des jeweils zu bearbeitenden Werkstückes 3 automatisch ermittelt und mit der der Abrichttisch 2 in Abhängigkeit von der gemessenen Dicke optimal auf das erforderliche Abrichtmaß eingestellt wird. Die Meßeinrichtung 30 hat zwei Meßplatten 31 und 32, die in Transportrichtung 16 mit einem solchen Abstand hintereinander liegen, daß sie im Bereich der beiden Enden des zu bearbeitenden Werkstückes 3 angeordnet sind. Die in Transportrichtung rückwärtigen Enden 33, 34 der Meßplatten 31, 32 sind schräg aufwärts abgewinkelt, so daß die Werkstücke 3 einwandfrei unter den Meßplatten 31, 32 transportiert werden können. Die beiden Meßplatten 31, 32 haben eine ebene Unterseite 35, 36, die horizontal verläuft und mit der sie auf dem jeweiligen Werkstück 3 aufliegen.

Die Meßplatten 31, 32 sind am unteren Ende eines senkrecht nach oben abstehenden Trägers 37, 38 befestigt, an dem mit Abstand übereinander die Enden zweier Parallelogrammlenker 39, 40 und 41, 42 angelenkt sind. Die anderen Enden der Parallelogrammlenker 39 bis 42 sind an einem weiteren, aufwärts sich erstreckenden Träger 43, 44 angelenkt, der auf dem Ständerteil 21 befestigt ist. Die Lenkerachsen liegen horizontal und parallel zueinander.

Die oberen Parallogrammlenker 39, 41 sind fest mit einem Lenker 45, 46 verbunden, der stumpfwinklig zum Parallelogrammlenker 39, 41 liegt. Die von den Parallelogrammlenkern 39, 41 abgewandten Enden der beiden Lenker 45, 46 sind durch eine Schiene 47 miteinander verbunden, die einen Gleichlauf der Parallelogrammlenker 39 bis 42 bei der Höhenverstellung der Meßplatten 31, 32 gewährleistet. Die Unterseiten 35, 36 der Meßplatten 31, 32 liegen in einer gemeinsamen Horizontalebene und bilden eine Auflagefläche, mit der die Meßplatten auf dem zu bearbeitenden Werkstück 3 aufliegen.

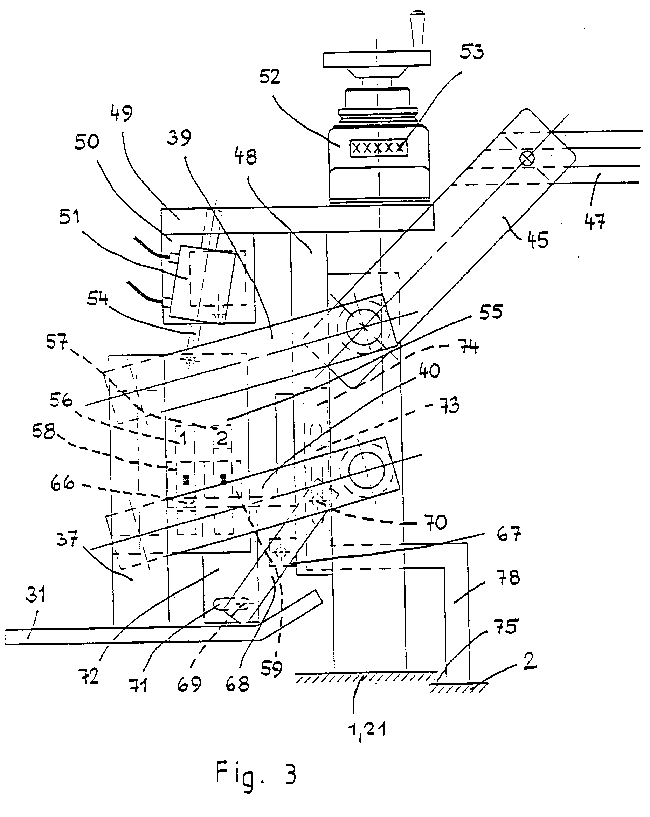

Die zur Höhenverstellung der Meßplatten 31, 32 vorgesehene Einrichtung wird anhand von Fig. 3 erläutert. Am Ständer 1 bzw. am Ständerteil 21 ist eine Stütze 48 höhenverstellbar gelagert. Am oberen Ende hat sie einen Träger 49, der mit einer Halterung 50 für eine Kolben-Zylinder-Einheit 51 versehen ist. Sie ist um eine Horizontalachse schwenkbar an der Halterung 50 gelagert. Zur Höhenverstellung der Stütze 48 dient eine an sich bekannte Einstelleinrichtung 52, die mit eine Anzeige 53, vorzugsweise einer Digitalanzeige, versehen ist.

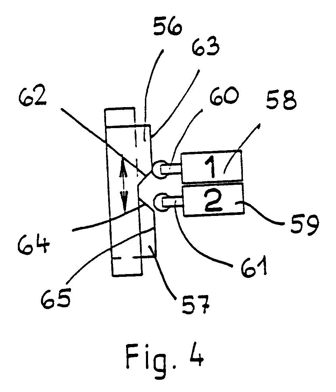

An der Kolbenstange 54 der Kolben-Zylinder-Einheit 51 ist ein plattenförmiger Träger angelenkt, der mit dem Träger 37 der Meßplatte 31 fest verbunden ist. Auf dem Träger 55 sind mit Abstand nebeneinander zwei Schaltnocken 56 und 57 vorgesehen, die, wie Fig. 4 zeigt, außerdem auch in Höhenrichtung versetzt zueinander angeordnet sind. Der Schaltnocke 56 ist ein Schalter 58 und der Schaltnocke 57 ein Schalter 59 zugeordnet. Die beiden Schalter 58, 59 haben jeweils einen Schaltstößel 60 und 61, der an der jeweiligen Schaltnocke 56 und 57 anliegt. Die Schaltnocke 56 hat auf ihrer der Schaltnocke 57 zugewandten Seite eine abfallende Steuerfläche 62, die in eine vertikale Steuerfläche 63 übergeht. In gleicher Weise ist der Schaltnocken 57 auf seiner der Schaltnocke 56 zugewandten Seite mit einer abfallenden Steuerfläche 64 versehen, die in eine vertikale Steuerfläche 65 übergeht, die in der gleichen Vertikalebene wie die Steuerfläche 63 liegt.

Die beiden Schalter 58, 59 sind auf einem horizontalen Träger 66 angeordnet, der in Transportrichtung 16 der Werkstücke 3 von der Stütze 48 absteht. An der Stütze 48 ist nahe dem unteren Ende eine in Richtung auf den Träger 37 vorstehende Lasche 67 vorgesehen, an der ein Hebel 68 schwenkbar gelagert ist. Er liegt parallel zu den Lenkern 9, 10, mit denen der Abrichttisch 2 gelenkig mit dem Ständer 1 verbunden ist. Der Hebel 68 ist als zweiarmiger Hebel wirksam und hat gleich lange Hebelarme. An beiden Hebelarmen ist jeweils ein senkrecht abstehender Zapfen 69 und 70 vorgesehen. Die Schwenkachse des Hebels 68 sowie die Achsen der Zapfen 69, 70 liegen horizontal und senkrecht zur Transportrichtung 16 der Werkstücke 3. Der Abstand der Schwenkachse des Hebels 68 von den Achsen der Zapfen 69, 70 ist gleich groß wie der Abstand zwischen den Gelenkachsen der Lenker 9, 10. Der Zapfen 69 greift in einen in Transportrichtung 16 verlaufenden Längsschlitz 71 am unteren Ende einer Stütze 72 ein, die hängend am Träger 66 befestigt ist und sich bis nahe an die Meßplatte 31 erstreckt. Der andere Zapfen 70 greift in einen Vertikalschlitz 73 eines dem Abrichttisch 2 zugeordneten Gestängeteiles 74 ein.

Mit der Kolben-Zylinder-Einheit 51 kann die Meßplatte 31 über die Träger 37, 55 in der Höhe relativ zur Auflagefläche 75 (Fig. 1 und 3), auf der die Holzstücke 3 während ihres Durchlaufes durch die Abrichtmaschine aufliegen, eingestellt werden. Über die Lenker 45, 46 und die Schiene 47 wird auch die andere Meßplatte 32 (Fig. 1) in gleichem Maße in der Höhe verstellt. Mit der Einstelleinrichung 52 wird das Fertigmaß des zu bearbeitenden Werkstückes 3 eingestellt. Das im Magazin unterste Werkstück 3 wird mittels des Schiebers 26 in Pfeilrichtung 28 (Fig. 2) so weit rechtwinklig zur Transportrichtung 16 verschoben, bis es am Anschlag 27 anliegt. Während dieses Verschiebevorganges ist die Kolbenstange 54 der Kolben-Zylinder-Einheit 51 eingefahren und somit die Meßplatten 31, 32 angehoben, so daß das Werkstück 3 einwandfrei bis zum Anschlag 27 verschoben werden kann.

Wenn es am Anschlag 27 anliegt, wird die Kolbenstange 54 ausgefahren, wodurch über die Träger 37, 55 die Meßplatte 31 und über die Lenker 45, 46 und die Schiene 47 auch die andere Meßplatte 32 nach unten verstellt wird, bis beide Meßplatten auf dem zu bearbeitenden Werkstück 3 nahe seinen Enden aufliegen. Wenn das Werkstück 3 über seine Länge gebogen und/oder um seine Längsachse tordiert ist, hat die Oberseite der beiden Enden 76, 77 des Werkstückes 3 (Fig. 1) einen Abstand von der Auflagefläche 75 des Abrichttisches 2, der größer ist als das mit der Einrichtung 52 eingestellte Fertigmaß. Dann liegt der Schaltstößel 60 des Schalters 58 an der schrägen Steuerfläche 62 des Schaltnockens 56 an. Dadurch erhält der Antriebsmotor 6 (Fig. 1) des Abrichttisches 2 ein Einschaltsignal, wodurch die Gewindespindel 7 in der erforderlichen Richtung gedreht wird. Ist das von den Meßplatten 31, 32 gemessene Maß größer als das mit der Einstelleinrichtung 52 eingestellte Fertigmaß, wird der Abrichttisch 2 abgesenkt. Über ein den Gestängeteil 74 aufweisendes Gestänge 78 des Abrichttisches 2 wird über den zweiarmigen Hebel 68 die Stütze 72 so verstellt, daß der Schaltstößel 60 wieder auf die Steuerfläche 63 des Schaltnockens 56 gelangt, so daß beide Schaltstößel 60, 61 der Schalter 58, 59 eingefahren sind. Dann wird der Antriebsmotor 6 abgeschaltet. Infolge der Übersetzung mittels des zweiarmigen Hebels 68 werden die Schalter 58, 59 bzw. die diese tragende Stütze 72 um den gleichen Betrag, um den der Abrichttisch 2 in der Höhe verstellt wird, ebenfalls so weit verstellt, bis die beiden Schaltstößel 60, 61 ihre neutrale Lage gemäß Fig. 4 einnehmen, in der die Schaltstößel auf den Steuerflächen 63, 65 der Schaltnocken 56, 57 aufliegen. Infolge dieser automatischen Einstellung des Abrichttisches 2 auf die mit den Meßplatten 31, 32 gemessene tatsächliche Dicke des zu bearbeitenden Werkstückes 3 wird erreicht, daß die Spanabnahme am Werkstück mittels des unteren Werkzeuges 4 sowie eines oberen Werkzeuges (Fig. 1) an der Unter- und an der Oberseite des Werkstückes 3 gemittelt ist.

Im folgenden soll die Wirkungsweise der Abrichtmaschine an einem Beispiel erläutert werden. Mit der Einstelleinrichtung 52 wird ein Fertigmaß von 40 mm eingestellt. An der Anzeige 53 läßt sich dieser Wert einfach ablesen. Zum Quereinschieben des Werkstückes 3 mittels des Schiebers 26 wird die Kolbenstange 54 eingefahren. Dadurch werden die Meßplatten 31, 32 angehoben. Nach dem Einschieben des Werkstückes 3 wird die Kolbenstange 54 ausgefahren, so daß in der beschriebenen Weise die Meßplatten 31, 32 abgesenkt werden, bis sie auf den Enden 76, 77 des Werkstückes 3 aufliegen. Da das Werkstück 3 in seiner Längsrichtung gebogen und/oder um seine Längsachse verdrillt ist, setzen die Meßplatten 31, 32 bereits bei beispielsweise 44 mm auf. Dies hat zur Folge, daß die Schalter 58, 59, die über den Träger 66 und die Stütze 48 mit der Einstelleinrichtung 52 verbunden sind, gegenüber den Schaltnocken 56, 57 versetzt angeordnet sind. Dies ist darauf zurückzuführen, daß die Schaltnocken 56, 57 am Träger 55 vorgesehen sind, der mit der Kolbenstange 54 verbunden ist. Beim Ausfahren der Kolbenstange 54 gelangen die Meßplatten 31, 32 früher am Werkstücke 3 zur Anlage, als mit der Einstelleinrichtung 52 eingestellt ist. Die Folge hiervon ist, daß sich zwar der Schaltstößel 61 des Schalters 59 auf der Steuerfläche 65 befindet, daß jedoch der Schaltstößel 60 auf der abfallenden Steuerfläche 62 des Schaltnockens 56 aufliegt. Der Schalter 58 ist somit frei und gibt ein entsprechendes Schaltsignal an den Antriebsmotor 6, über den der Abrichttisch 2 abgesenkt wird. Nach 2 mm Absenkweg gelangt der Schaltstößel 60 wieder auf die Steuerfläche 63 der Schaltnocke 56. Dann ist die Stellung gemäß Fig. 4 erreicht, in der der Antriebsmotor 6 ein Abschaltsignal erhält. Infolge des zweiarmigen Hebels 68 wird beim Absenken des Abrichttisches 2 die Stütze 72 um das entsprechende Maß angehoben.

Sobald die beiden Schaltstößel 60, 61 gedrückt sind, wird ein Einschubzylinder 81 (Fig. 1) eingeschaltet, der auf dem Arbeitstisch 2 vorgesehen ist und das Werkstück 3 in Transportrichtung 16 verschiebt, bis es unter eine erste Vorschubwalze 79 gelangt. Anschließend kehrt der Einschubzylinder 81 in seine Ausgangslage zurück.

An der von der Seitenwand 18 abgewandten Außenseite der Seitenwand 17 des Magazins 15 ist ein Endschalter 82 (Fig. 1) vorgesehen, der den Durchlauf des Werkstückes 3 abtastet und nach dem Durchlauf des Werkstückes ein Schaltsignal an den Antrieb des Schiebers 26 gibt, der nunmehr ein weiteres Holzstück aus dem Magazin 15 einschiebt.

Am Magazin 15 ist ein Endschalter 83 angeordnet (Fig. 2), mit dem die Füllhöhe des Magazins 15 überwacht wird. Der Endschalter 83 ist beispielsweise in Höhe des drittletzten Werkstückes 3 vorgesehen, so daß ein entsprechendes Signal zum Nachfüllen des Magazins 15 abgegeben wird, bevor das Magazin 15 vollständig geleert ist. Dadurch ist sichergestellt, daß die Bedienungsperson das Magazin 15 ohne Gefahr einer Verletzung füllen kann.

Mit der Abrichtmaschine ist es sehr einfach möglich, gebogene und/oder tordierte Werkstücke so an der Ober- und Unterseite abzuhobeln, daß bei geringstem Materialverlust das Werkstück nach dem Durchgang durch die Abrichtmaschine möglichst zueinander parallele Ober- und Unterseiten aufweist. Die Einstellung der Spanabnahme auf die unterschiedlichen Werkstückdicken erfolgt vollautomatisch, indem mit den Meßplatten 31, 32 die tatsächliche Dicke des Werkstückes ermittelt und danach der Abrichttisch 2 in bezug auf die Hobelwerkzeuge in der Höhe entsprechend eingestellt wird.

Es ist auch möglich, die Werkstücke 3 so in das Magazin 15 einzulegen, daß ihre Enden nach unten gerichtet sind. In diesem Fall ergibt sich die höchste Ausdehnung des Werkstückes 3 etwa in halber Länge, die mit nur einer Meßplatte erfaßt werden kann.

Anstelle der beiden mit Abstand hintereinander angeordneten Meßplatten 31, 32 kann auch nur eine einzige Meßplatte vorgesehen sein, die so lang ist, daß sie die Werkstückenden erfassen kann.

Vorteilhaft kann die Meßplatte 32 in Transportrichtung 16 zur Anpassung an unterschiedlich lange Werkstücke 3 eingestellt werden. In gleicher Weise sind dann die Seitenwand 18 des Magazins 15 und der Einschubzylinder 81 verstellbar.

## Patentansprüche

1. Maschine zum Bearbeiten von Werkstücken aus Holz, Kunststoff und dgl., mit einem eine Auflage (2) für die zu bearbeitenden Werkstücke (3) aufweisenden Tisch, auf dem die Werkstücke mit einer Transportvorrichtung in Transportrichtung zu mindestens einem rotierenden unteren Bearbeitungswerkzeug (4) transportierbar sind, mit dem die Unterseite des Werkstückes zu bearbeiten ist,
dadurch gekennzeichnet, daß im Bereich oberhalb des Transportweges des zu bearbeitenden Werkstückes (3) wenigstens ein Meßfühler (31, 32) vorgesehen ist, dem eine Schalteinrichtung (56 bis 59) zugeordnet ist, die mit einem Antrieb (6) zur Höhenverstellung der Auflage (2) relativ zum Meßfühler (31, 32) und zum unteren Bearbeitungswerkzeug (4) verbunden ist.

2. Maschine nach Anspruch 1,
dadurch gekennzeichnet, daß der Meßfühler (31, 32) plattenförmig ausgebildet ist.

3. Maschine nach Anspruch 1 oder 2,
dadurch gekennzeichnet, daß der Meßfühler (31, 32) mit einer Hubvorrichtung (51), vorzugsweise einer Kolben-Zylinder-Einheit, verbunden ist.

4. Maschine nach einem der Ansprüche 1 bis 3,
dadurch gekennzeichnet, daß in Transportrichtung (16) des Werkstückes (3) mit Abstand hintereinander wenigstens zwei Meßfühler (31, 32) vorgesehen sind.

5. Maschine nach einem der Ansprüche 1 bis 4,
dadurch gekennzeichnet, daß die Schalteinrichtung (56 bis 59) Schaltnocken (56, 57) aufweist, die fest mit dem einen Meßfühler (31) verbunden und vorzugsweise an einem Träger (55) vorgesehen sind, der mit der Hubvorrichtung (51) verbunden ist.

6. Maschine nach einem der Ansprüche 1 bis 5,
dadurch gekennzeichnet, daß die Schalteinrichtung (56 bis 59) Schalter (58, 59) aufweist, die mit den Schaltnocken (56, 57) zusammenwirken und vorzugsweise an einem Träger (66) vorgesehen sind, der relativ zum Schaltnocken-Träger (55) höhenverstellbar ist.

7. Maschine nach Anspruch 6,
dadurch gekennzeichnet, daß der Schalter-Träger (66) relativ zur Auflage (2) höhenverstellbar, vorzugsweise gegensinnig zueinander höhenverstellbar sind.

8. Maschine nach Anspruch 7,
dadurch gekennzeichnet, daß der Schalter-Träger (66) über einen zweiarmigen Hebel (68) mit der Auflage (2) verbunden ist, der vorzugsweise an einer den Schalter-Träger (66) tragenden Stütze (72) und an einem der Auflage 82) zugeordneten Gestängeteil (74) angreift.

9. Maschine nach Anspruch 8,
dadurch gekennzeichnet, daß die Stütze (72) einen in Transportrichtung (16) des Werkstückes (3) sich erstreckenden Schlitz (71) aufweist, in den ein vom Hebel (68) abstehender Führungsteil (69) eingreift.

10. Maschine nach Anspruch 8 oder 9,
dadurch gekennzeichnet, daß der Gestängeteil (74) einen in Höhenrichtung sich erstreckenden Schlitz (73) aufweist, in den der Hebel (68), dessen Arme vorzugsweise gleich lang sind, mit einem weiteren Führungsteil (70) eingreift.

11. Maschine nach einem der Ansprüche 6 bis 10,
dadurch gekennzeichnet, daß die Schalteinrichtung (56 bis 59), die Meßfühler (31, 32) und die Hubvorrichtung (51) Teil einer Einstelleinrichtung (52) sind, mit der das Fertigmaß des zu bearbeitenden Werkstückes (3) einstellbar ist.

12. Maschine nach Anspruch 11,
dadurch gekennzeichnet, daß der Schaltnocken-Träger (55) der Schalteinrichtung (56 bis 59) und die Meßfühler (31, 32) relativ zur Einstelleinrichtung (52) höhenverstellbar sind.

13. Maschine nach einem der Ansprüche 1 bis 12,
dadurch gekennzeichnet, daß die Maschine ein Magazin (15) aufweist, in dem die zu bearbeitenden Werkstücke (3) übereinander angeordnet sind, die vorzugsweise mit mindestens einem Schieber (26) quer zur Transportrichtung (16) aus dem Magazin (15) herausschiebbar sind, das vorzugsweise einen Schalter (83) zur Überwachung des Füllgrades aufweist.

14. Maschine nach Anspruch 13,
dadurch gekennzeichnet, daß der Schieberantrieb mit einem im Transportweg der Werkstücke (3) zum Bearbeitungswerkzeug (4) liegenden Schalter (82) gekoppelt ist.

## Claims

1. A machine for machining workpieces made of wood, plastics material and the like, having a table which has a bearing surface (2) for the workpieces (3) to be machined and on which the workpieces can be fed in the direction of feed by means of a feeding device towards at least one rotating lower machining tool (4) with which the underside of the work piece is to be machined, characterised in that at least one measuring sensor (31, 32) is provided in the region above the feed path of the workpiece (3) to be machined, a switching arrangement (56 to 59) being associated with this measuring sensor (31, 32) and being connected to a drive (6) for vertical adjustment of the bearing surface (2) relative to the measuring sensor (31, 32) and to the lower machining tool (4).

2. A machine in accordance with Claim 1, characterised in that the measuring sensor (31, 32) is plate-shaped.

3. A machine in accordance with Claim 1 or 2, characterised in that the measuring sensor (31, 32) is connected to an elevating device (51), preferably a piston-cylinder unit.

4. A machine in accordance with any one of Claims 1 to 3, characterised in that at least two measuring sensors (31, 32) are provided one behind the other at a distance in the feed direction (16) of the workpiece (3).

5. A machine in accordance with any one of Claims 1 to 4, characterised in that the switching arrangement (56 to 59) has contact cams (56, 57) which are securely connected to one measuring sensor (31) and which are preferably provided on a bearer (55) connected to the elevating device (51).

6. A machine in accordance with any one of Claims 1 to 5, characterised in that the switching arrangement (56 to 59) has switches (58, 59) which co-operate with the contact cams (56, 57) and which are preferably provided on a carrier (66) which is vertically-adjustable relative to the contact-cam bearer (55).

7. A machine in accordance with Claim 6, characterised in that the switch bearer (66) is vertically adjustable relative to the bearing surface (2), the two preferably being vertically-adjustable in opposite directions to one another.

8. A machine in accordance with Claim 7, characterised in that the switch bearer (66) is connected to the bearing surface (2) via a two-armed lever (68) which preferably engages both a support (72) bearing the switch bearer (66) and a linkage part (74) associated with the bearing surface (2).

9. A machine in accordance with Claim 8, characterised in that the support (72) has a slot (71) which extends in the feed direction (16) of the workpiece (3) and into which a guide part (69) projecting from the lever (68) engages.

10. A machine in accordance with Claim 8 or 9, characterised in that the linkage part (74) has a slot (73) which extends vertically and into which the lever (68), whose arms are preferably of equal length, engages by means of another guide part (70).

11. A machine in accordance with any one of Claims 6 to 10, characterised in that the switching arrangement (56 to 59), the measuring sensors (31, 32) and the elevating device (51) are part of an adjusting arrangement (52) by means of which the finished size of the workpiece (3) to be machined is adjustable.

12. A machine in accordance with Claim 11, characterised in that the contact-cam bearer (55) of the switching arrangement (56 to 59) and the measuring sensors (31, 32) are vertically adjustable relative to the adjusting arrangement (52).

13. A machine in accordance with any one of Claims 1 to 12, characterised in that the machine has a magazine (15) in which the workpieces (3) to be machined are arranged one on top of the other - the workpieces (3) preferably being able to be pushed from the magazine (15) transversely to the feed direction (16) by means of at least one pusher (26) - and which preferably has a switch (83) for monitoring the degree of fill.

14. A machine in accordance with Claim 13, characterised in that the pusher drive is coupled to a switch (82) located in the feed path of the workpieces (3) towards the machining tool (4).

## Revendications

1. Machine pour l'usinage de pièces à oeuvrer en bois, en matière plastique ou similaire, comprenant une table présentant une plate-forme (2) pour les pièces à usiner (3), sur laquelle les pièces peuvent être transportées au moyen d'un dispositif de transport et dans la direction de transport jusqu'à au moins un outil d'usinage inférieur (4) en rotation, au moyen duquel il s'agit d'usiner la face inférieure de la pièce,
caractérisée en ce que dans la région au-dessus du trajet de transport de la pièce à usiner (3), il est prévu au moins un capteur de mesure (31, 32) auquel est associé un dispositif de commutation (56 à 59) qui est relié à un entraînement (6) pour le réglage en hauteur de la plate-forme (2) par rapport au capteur de mesure (31, 32) et à l'outil d'usinage inférieur (4).

2. Machine selon la revendication 1, caractérisée en ce que le capteur de mesure (31, 32) est réalisé sous forme de plaquette.

3. Machine selon l'une ou l'autre des revendications 1 et 2, caractérisée en ce que le capteur de mesure (31, 32) est relié à un dispositif de relevage (51), de préférence une unité à piston-et-cylindre.

4. Machine selon l'une des revendications 1 à 3, caractérisée en ce qu'il est prévu au moins trois capteurs de mesure (31, 32) à distance les uns derrière les autres dans la direction de transport (16) de la pièce (3).

5. Machine selon l'une des revendications 1 à 4, caractérisée en ce que le dispositif de commutation (56 à 59) comporte des cames de commutation (56, 57), lesquelles sont fermement reliées à l'un des capteurs de mesure (31) et sont de préférence prévues sur un support (55) qui est relié au dispositif de relevage (51).

6. Machine selon l'une des revendications 1 à 5, caractérisée en ce que le dispositif de commutation (56 à 59) comprend des commutateurs (58, 59) qui coopèrent avec les cames de commutation (56, 57) et sont de préférence prévus sur un support (66), lequel est réglable en hauteur par rapport au support des cames de commutation (55).

7. Machine selon la revendication 6, caractérisée en ce que le support de commutateur (66) est réglable en hauteur par rapport à la plate-forme (2), et de préférence de manière à ce que le réglage en hauteur de l'un par rapport à l'autre se produise en sens inverse.

8. Machine selon la revendication 7, caractérisée en ce que le support de commutateur (66) est relié à la plate-forme (2) au moyen d'un levier à deux bras (68), lequel attaque de préférence un appui (72) qui porte le support de commutateur (66), et une pièce de tringlerie (74) associée à la plate-forme (82).

9. Machine selon la revendication 8, caractérisée en ce que l'appui (72) comporte une fente (71) qui s'étend dans la direction de transport (16) de la pièce (3), dans laquelle s'engage une partie de guidage (69) qui dépasse du levier (68).

10. Machine selon l'une ou l'autre des revendications 8 et 9, caractérisée en ce que la pièce de tringlerie (74) comporte une fente (73) qui s'étend dans la direction de la hauteur, dans laquelle s'engage le levier (68), dont les bras sont de préférence de même longueur, au moyen d'une autre partie de guidage (70).

11. Machine selon l'une des revendications 6 à 10, caractérisée en ce que le dispositif de commutation (56 à 59), les capteurs de mesure (31, 32) et le dispositif de relevage (51) font partie d'un dispositif de réglage (52) au moyen duquel il est possible de régler la dimension finale de la pièce à usiner (3).

12. Machine selon la revendication 11, caractérisée en ce que le support (55) des cames de commutation du dispositif de commutation (56 à 59) et les capteurs de mesure (31, 32) sont réglables en hauteur par rapport au dispositif de réglage (52).

13. Machine selon l'une des revendications 1 à 12, caractérisée en ce que la machine comporte un magasin (15), dans lesquels les pièces à usiner (3) sont agencées les unes au-dessus des autres, lesdites pièces pouvant être sorties hors du magasin (15) de préférence à l'aide d'au moins un coulisseau (26) perpendiculairement à la direction de transport (16), ledit magasin présentant de préférence un commutateur (83) pour la surveillance du degré de remplissage.

14. Machine selon la revendication 13, caractérisée en ce que l'entraînement du coulisseau est accouplé à un commutateur (82) situé dans le trajet de transport des pièces (3) vers l'outil d'usinage (4).
